# EUROPEAN PATENT APPLICATION

(11) **EP 4 556 269 A1**
(43) Date of publication of application: **21.05.2025**
(21) Application number: 24212956.7
(22) Date of filing: 14.11.2024
(51) Int. Cl.: B60H 1/24, B60H 1/34

(54) **AIR VENT, IN PARTICULAR FOR THE EMISSION OF AIR INTO A MOTOR VEHICLE PASSENGER COMPARTMENT**

(30) Priority: 16.11.2023 IT 202300024339
(71) Applicant: FERRARI S.p.A., 41100 Modena (IT)
(72) Inventor: MOSCARDI, Andrea, 41100 MODENA (IT); SANCHEZ GOMEZ, Isaac Joaquin, 41100 MODENA (IT)
(74) Representative: Studio Torta S.p.A.

(57) **Abstract**

An air vent, in particular for the emission of air into a passenger compartment of a motor vehicle, being provided with an internal cavity that communicates with an air ventilation system and having an outlet opening (16) with a fixed grille (21), provided with fins inclined differently to each other, so as to be able, in use, to direct an air flow, according to at least two spatial orientations different to each other, wherein the air vent is also provided with a selector member (30) having a cover wall, which is arranged on the outlet opening (16) and has a window (35) smaller than the outlet opening (16), and the selector member (30) is movable so as to position its window (35) at any one area of the outlet opening (16) and, therefore, to select one of the different spatial orientations provided for the air flow.

## Description

### CROSS-REFERENCE TO RELATED APPLICATIONS

This patent application claims priority from Italian patent application no. 102023000024339, filed on November 16, 2023, the entire disclosure of which is incorporated herein by reference.

### TECHNICAL FIELD

The present invention relates to an air vent, in particular for the emission of air into a motor vehicle passenger compartment.

### PRIOR ART

As known, the passenger compartments of motor vehicles have a dashboard that is arranged beneath a windscreen and is provided with an instrument panel, possibly with glove boxes, and with a plurality of air vents, configured so as to emit and direct air into the passenger compartment.

In general, vents for motor vehicles have an outlet provided with a grille, formed of fins inclined so as to deflect and, therefore, direct the air flow towards a specific zone of the passenger compartment. In order to vary the direction of the air flow, the known solutions generally include a movement system that is operable by the user to vary the inclination of said fins. Often, this movement system, and/or the grille with its set of fins, are relatively complex and include a relatively high number of movable components, so they require lengthy times and high costs for their assembly and can be more subject to malfunctions and breakdowns. Furthermore, the fact of having numerous movable components, of relatively small dimensions, can negatively influence the safety of the people occupying the passenger compartment during a possible accident: in fact, in the presence of impacts, such components could detach from the fixed parts of the air vent and become potentially hazardous loose objects in the passenger compartment.

There is therefore a need to solve these problems, providing an air vent that allows variation of the orientation of the air flow supplied towards the passenger compartment by means of a limited number of moving parts, and possibly by means of a solution that is relatively lightweight and simple.

Aim of the present invention is therefore to satisfy the needs indicated here above, in a relatively simple and inexpensive way.

### DESCRIPTION OF THE INVENTION

The aforesaid aim is achieved by an air vent, in particular for the emission of air into a motor vehicle passenger compartment, as defined in claim 1, and by a motor vehicle according to what is defined in claim 10. At the same time, the dependent claims relate to preferred embodiments of the present invention.

### BRIEF DESCRIPTION OF THE DRAWINGS

Preferred embodiments of the invention are described below, for a better understanding of it, by way of non-limiting example and with reference to the appended drawings, in which:
- Figure 1 is a partial perspective view of a motor vehicle passenger compartment, provided with a preferred embodiment of the air vent of the present invention;
- Figure 2 is similar to Figure 1 and shows a different possible position in the passenger compartment for the air vent of the present invention;
- Figures 3A and 3B are schematic and simplified side views of the air vent of the present invention, shown in two different operating conditions;
- Figures 4A and 4B are schematic front views relating to the operating conditions visible in Figures 3A and 3B;
- Figures 5A and 5B are similar to Figures 4A and 4B and show two other operating conditions of the air vent;
- Figure 6A is a transverse and schematic cross-section according to line VI-VI of Figure 3A;
- Figure 6B is similar to Figure 6A and relates to the operating condition of Figure 5A; and
- Figure 7 shows, schematically, a further embodiment of the air vent of the present invention.

### EMBODIMENTS OF THE INVENTION

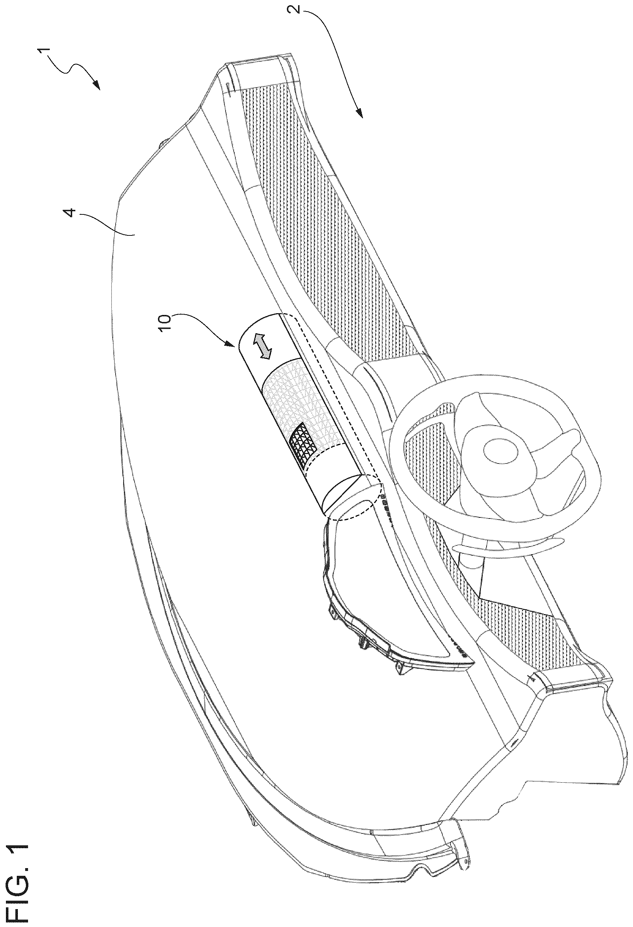

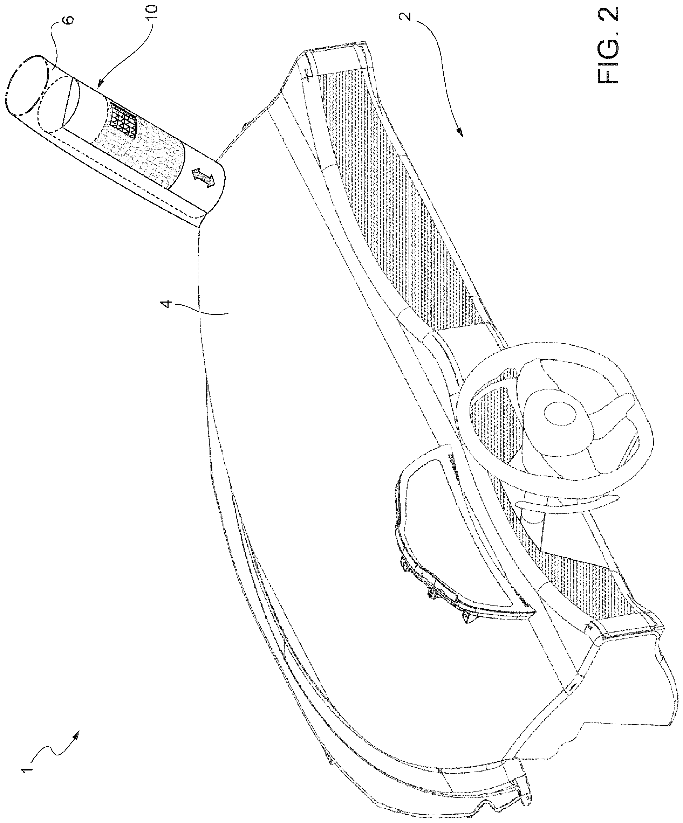

In Figure 1, number 1 is used to indicate, as a whole, a motor vehicle (partially shown). The motor vehicle 1 comprises a passenger compartment 2, having, for example, a driving position for a driver and at least one position for a passenger (not shown). As shown in Figure 2, the passenger compartment 2 is delimited frontally by a dashboard 4 and by a windscreen 5, which is arranged above the dashboard 4 and between two columns 6 that extend upwards starting from the side ends of the dashboard 4.

The motor vehicle 1 comprises at least one air vent 10, for the emission of air into the passenger compartment 2. In the embodiment of Figure 1, the air vent 10 is carried by the dashboard 4, for example is integrated into it, and in particular is arranged in a central position; in the embodiment of Figure 2, on the other hand, two air vents 10 are arranged respectively at the sides of the windscreen 5 and, preferably, are carried by the columns 6. In any case, the shown examples do not exclude the possibility of other positions, such as, for example: above the windscreen (for example, at the sun visors), at the roof liner on the roof of the vehicle, on the tunnel console between the two front positions, at a rear end of this tunnel console (to direct the air towards the rear positions of the vehicle), etc.

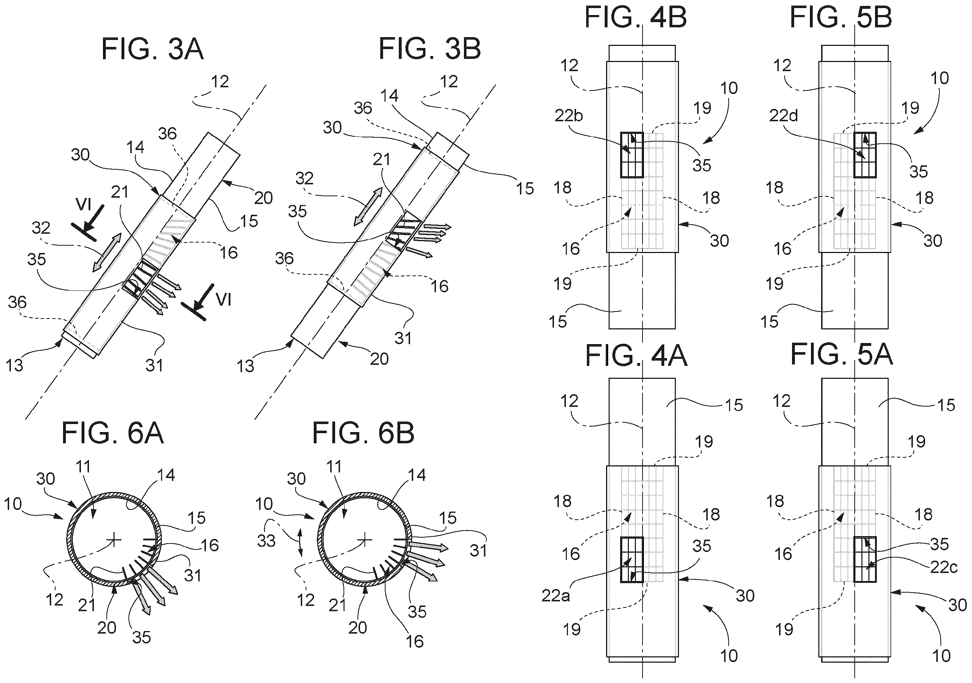

With reference to Figures 6A and 6B, the air vent 10 comprises an internal cavity 11, which extends along an axis 12 and communicates, in a known way, not shown, with a ventilation and air conditioning system of the motor vehicle 1, so as to receive pressurised air. In particular, with reference to Figures 3A and 3B, the internal cavity 11 communicates with such a system through an inlet 13 arranged along the axis 12. At the opposite axial end with respect to the inlet 13, preferably the internal cavity 11 is closed.

The internal cavity 11 is defined radially by a hollow structure 14 that is arranged in a fixed position in the passenger compartment 2 and comprises a front portion 15 arranged between the internal cavity 11 and the passenger compartment 2. In the preferred example that is schematically shown, the hollow structure 14 is defined by a circular cylindrical wall, and the front portion 15 forms a sector or segment of it. The front portion 15 has an outlet opening 16, which passes through the hollow structure 14 along an orthogonal or radial direction with respect to the axis 12, in order to allow an air flow to exit from the internal cavity 11 and to enter into the passenger compartment 2.

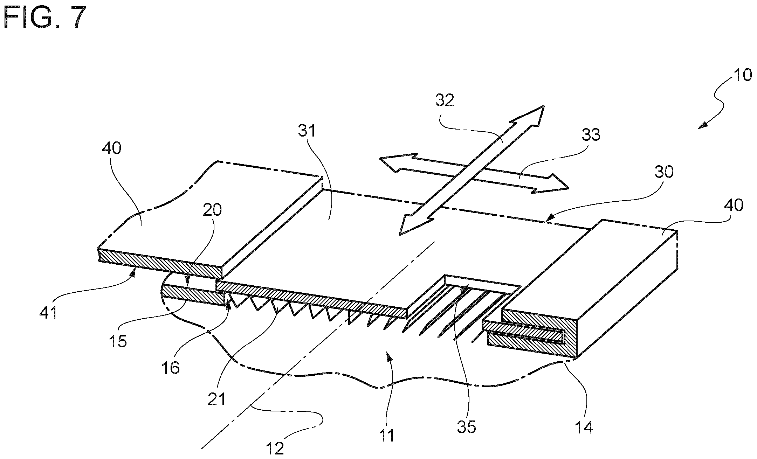

Preferably, as indicated in Figure 4A, the outlet opening 16 has a perimeter with a substantially rectangular shape, i.e. its edge on the front portion 15 comprises two rectilinear sides 18 parallel to the axis 12 and two sides 19, which are coupled to the ends of the sides 18 and are parallel with each other. The sides 19 can be curved, as in the example shown, or also rectilinear (as in the embodiment of Figure 7).

Once again with reference to Figures 6A and 6B, according to a preferred aspect of the present invention, externally (i.e. on the opposite face with respect to the internal cavity 11), the hollow structure 14 is delimited by a circular cylindrical surface 20, the axis of which coincides with the axis 12. According to a variant not shown, only the front portion 15 has a circular cylindrical outer surface, whereas the diametrically opposite part of the hollow structure 14 can be shaped differently.

The outlet opening 16 is engaged by a grille 21, schematically shown, comprising a plurality of deflecting fins, configured so as to direct an outgoing air flow through the outlet opening 16 along directions having a predetermined spatial orientation. According to an aspect of the present invention, the grille 21 and its fins are stably fixed with respect to the hollow structure 14, i.e. they are not adjustable; furthermore, the fins of the grille 21 have different inclinations to each other, so as to define various outlet directions for the air flow, with different spatial orientations to each other.

By way of non-limiting example, the grille 21 could be formed of several groups or sets of fins, which occupy corresponding areas of the outlet opening 16, indicated respectively by the reference numbers 22a, 22b, 22c and 22d in Figures 4A, 4B, 5A and 5B. The fins of each group have a different inclination to those of the other groups, so as to define substantially four operating conditions, corresponding with different spatial orientations in the emission of the air flow, i.e.: on the lower left-hand side (fig. 3A, 4A e 6A), on the upper left-hand side (fig. 3B and 4B), on the upper right-hand side (fig. 5B) and on the lower right-hand side (Fig. 5A and 6B). More in particular, the window 35 is substantially rectangular; therefore, the four areas 22a, 22b, 22c and 22d are also substantially rectangular, and are arranged respectively at the four corners of the outlet opening 16.

The air vent 10 comprises, furthermore, a selector member 30, which is movable to select which area 22a, 22b, 22c and 22d of the grille 21 is crossed by the air flow that exits from the internal cavity 11, and which groups of fins, on the other hand, remain unused. The selector member 30 is arranged outside the hollow structure 14, on the surface 20, comprises a cover wall 31 arranged on the front portion 15, at the outlet opening 16, and is slidable along the front portion 15.

In particular, the front portion 15 has dimensions such as to always be overlapped at the perimeter edge of the outlet opening 16, independently of the position of the selector member 30. End-of-travel elements (not shown) can be provided to stop the sliding of the selector member 30 with respect to the structure 14.

In the preferred solution shown, the selector member 30 is defined by a sleeve, which is coaxial to the hollow structure 14, surrounds it and has an inner surface coupled to the surface 20 slidably. In particular, this sleeve is capable of sliding axially and rotating around the axis 12. The outer shape of the hollow structure 14, which is circular cylindrical, performs a guide function, both for the axial sliding and for the rotation of the sleeve.

Once again with reference to the appended drawings, the cover wall 31 has a window 35, which is pass-through, normally open, smaller than the outlet opening 16 and arranged at it. In particular, the cover wall 31 has a single window 35. By moving the selector member 30 with respect to the front portion 15, manually or by actuators, not shown, the user can position the window 35 along the entire outlet opening 16. In other words, thanks to the sliding of the selector member 30 on the surface 20, the window 35 can be arranged at any one of the areas 22a, 22b, 22c and 22d.

In general, therefore, the window 35 can translate along a direction 32 (Figure 3A) parallel to the axis 12 and along a direction 33 (Fig. 6B) which is orthogonal to the direction 32 and, in the specific case, is curved and circumferential with respect to the axis 12.

It appears evident from the above that the window 35 divides the outlet opening 16 and, being movable, allows selection of which fins of the grille 21 are crossed by the air flow exiting the air vent 10, so thus allows selection of orientation of the air flow directed into the passenger compartment 2.

The specific example shown, as mentioned above, provides for four possible different orientations in the outlet direction of the air flow, respectively at the four corners of the outlet opening 16. The change in inclination between the fins of the grille 21 can be progressive, i.e. without any sudden change in inclination between the adjacent fins. With a progressive change of inclination, there is a tendency to also obtain a progressive change in the orientation of the air flow, in response to sliding of the window 35.

In the preferred embodiment shown, a part of the outlet opening 16 always remains open for the passage of the air, since the window 35 is permanently open. According to a variant not shown, the window 35 could be of the closable type, for example by a door carried by the cover wall 31. It is also possible to use different methods to close the air vent 10 completely, such as: move the window 35 laterally with respect to the outlet opening 16 and therefore have a full portion of the cover wall 31 as closure of the entire outlet opening 16; or provide for a closing valve at the inlet 13.

According to a simplified variant, the window 35 of the selector member 30 can be slidable in a single direction (for example, top-to-bottom or right-to-left), rather than being slidable along two orthogonal directions (32 and 33).

Preferably, the ends of the selector member 30 are coupled to the surface 20 via the interposition of appropriate gaskets 36, schematically shown in Figures 3A and 3B, in order to guarantee sealing and therefore prevent leakages of air laterally, i.e. at this coupling. For example, in the sleeve configuration of the selector member 30, the gaskets 36 are defined by O-rings arranged at the axial ends, on opposite parts of the outlet opening 16.

In general, use of the selector member 30 to select the area of passage into the outlet opening 16 is independent of the shape of the surface 20 (even if the circular cylindrical form is the preferred one). For example, Figure 7 schematically shows a different embodiment, in which the surface 20 at the front portion 15 is substantially flat, and the selector member 30 is also defined by a substantially flat wall, so the sliding directions 32 and 33 of the window 35 are both rectilinear. In this case, the guide function is performed by additional guide elements, different from the surface 20, for example by fixed appendages 40 (schematically shown) which are distanced from the surface 20 so as to define a guide slit 41 engaged slidably by the edges of the selector member 30 and so as to constrain the latter against the underlying surface 20.

It appears evident from the above that the features of the air vent 10 allow the orientation of the outgoing air flow to be changed, using a single component, i.e. the selector member 30, whereas the fins of the grille 21 are all fixed, without movable parts on the grille 21 or in the internal cavity 11. In particular, as described above in details, it is possible to obtain different spatial orientations of the air flow based on the position of the window 35, which selects which area of the grille 21 allows the passage of the air, while the remaining part of the outlet opening remains blocked by the cover wall 31. Therefore, the air vent 10 offers a high degree of safety in the case of impacts, and requires limited times and costs for manufacture and assembly.

The selector member 30 is also relatively simple, and is also relatively easy to operate by users. Furthermore, the selector member 30 has limited dimensions, does not substantially alter the visual attractiveness of the passenger compartment 2, and does not offer resistance to the outgoing air flow, since the window 35 preferably has no fins, grilles, filters, etc. Furthermore, the air vent 10 is formed of a relatively low number of components, so it is extremely lightweight.

Other advantages have been stated above and/or are evident to a person skilled in the art, based on the described and shown features.

In conclusion, it is also clear that changes and variants may be made to the air vent 10 described and illustrated above without thus deviating from the scope of protection as defined by the appended claims.

In particular, the width and shape of the outlet opening 16 and/or the ones of the internal cavity 11, the position of the air vent 10 inside the passenger compartment 2, the position of the inlet 13, the structure and the materials of the various parts of the air vent 10, etc., could be different from those schematically shown and/or described by way of example.

## Claims

1. An air vent (10), in particular for the emission of air into a passenger compartment (2) of a motor vehicle (1); the air vent (10) comprising:
- a structure (14), which defines an internal cavity (11) suitable to communicate, in use, with an air ventilation system and comprises a front portion (15) having an outlet opening (16) ;
- a plurality of deflecting fins, which are arranged in said outlet opening (16) in fixed positions with respect to said structure (14) and are inclined differently from each other so as to direct an air flow, in use, according to at least two different spatial orientations through said outlet opening (16); **characterized by** further comprising a selector member (30) having a cover wall (31), which is arranged on an external surface (20) of said front portion (15) and has a window (35) smaller than said outlet opening (16); said selector member (30) being movable with respect to said structure (14) so as to position said window (35) at any area of said outlet opening (16) and, therefore, select one of said orientations.

2. The air vent according to claim 1, wherein said outer surface (20) is circular cylindrical.

3. The air vent according to claim 2, wherein said structure (14) has a circular cylindrical outer shape.

4. The air vent according to claim 3, wherein said selector member (30) is defined by a sleeve arranged around said structure (14) .

5. The air vent according to claim 4, wherein said sleeve is guided by said outer surface (20) to slide along an axis (12) and rotate about said axis (12).

6. The air vent according to any one of the preceding claims, wherein said selector member (30) is coupled to said outer surface (20) via gaskets (36) to prevent air leakage at coupling areas between said selector member (30) and said structure (14).

7. The air vent according to claim 6, wherein said gaskets (36) are arranged on opposite sides of said outlet opening (16).

8. The air vent according to any one of the preceding claims, wherein said selector member (30) is slidable with respect to said structure (14) along a first and a second direction (32, 33), orthogonal to each other.

9. The air vent according to claim 8, wherein said first direction (32) is rectilinear, and said second direction (33) is circular about an axis (12) parallel to said first direction (32) .

10. Motor vehicle (1) comprising a passenger compartment (2) and at least one air vent (10) according to any one of the preceding claims, wherein said structure (14) is arranged in a fixed position in said passenger compartment (2).

11. The motor vehicle according to claim 10, wherein said air vent (10) is arranged alongside a windscreen (5), which frontally delimits said passenger compartment (2).

12. The motor vehicle according to claim 10 or 11, wherein said air vent (10) is carried by a dashboard (4), which frontally delimits said passenger compartment (2).
